# EUROPEAN PATENT APPLICATION

(11) **EP 4 576 504 A1**
(43) Date of publication of application: **25.06.2025**
(21) Application number: 24196338.8
(22) Date of filing: 26.08.2024
(51) Int. Cl.: H02K 1/276, H02K 1/32, H02K 7/00, H02K 9/19, H02K 21/16

(54) **ROTOR WITH IMPROVED COOLING STRUCTURE**

(30) Priority: 20.12.2023 KR 20230186651
(71) Applicant: Hyundai Mobis Co., Ltd., Gangnam-gu Seoul 06141 (KR)
(72) Inventor: SEO, Yeong Woo, 16488 Suwon-si, Gyeonggi-do (KR)
(74) Representative: Jung, Minkyu

(57) **Abstract**

Provided is a rotor, and more particularly, a rotor with improved cooling efficiency. The rotor with an improved cooling structure in the present disclosure may change a motor rotor structure with no additional parts, and form a blade on its surface by using a magnetic fixation adhesive to thus increase a transfer speed of a cooling fluid, thereby increasing a convective heat transfer rate, may be applied to a water-cooled or air-cooled motor, thereby improving motor performance, and may adopt a relatively simple structure, such as eliminating an existing cooling part such as an oil pipe, thereby reducing its material and process costs.

## Description

### TECHNICAL FIELD

The following disclosure relates to a rotor, and more particularly, to a rotor with improved cooling efficiency.

### BACKGROUND

A heat source of an electric vehicle drive motor may be a coil through which a current flows and an electrical steel core through which a magnetic flux flows. When the motor is operated, a temperature of a relevant part may be increased, and the motor may malfunction when the temperature is excessively increased. In order to prevent this malfunction, it may be important to cool the heat source of the motor. In this regard, there is an oil cooling method that directly sprays oil on the heat source of the motor, and a water cooling method that indirectly cools the heat source by flowing cooling water through a water passage part of a housing.

Here, an end coil part (or each of two ends of the coil, that is, an outermost part protruding from a core of the coil) shows a higher heat occurrence rate in the motor compared to the other components, and motor performance may thus be affected when local cooling is not performed on the end coil. Therefore, the prior art uses an additional part such as an oil pipe or a cooling plate to cool the end coil, which inevitably results in additional costs. In addition, when the motor is a water-cooled or air-cooled type rather than a fluid contact cooling type, it may be difficult to cool a stator core or a rotor core, and unfavorable for the end coil cooling because the end coil is obscured by the plate, the stator core, or the coil.

### SUMMARY

An embodiment of the present disclosure is directed to providing a rotor with an improved cooling structure that may maximize its cooling efficiency in such a way that a motor rotor structure is changed with no additional parts, and a blade is formed on its surface by using a magnetic fixation adhesive to thus form the blade for increasing a flow speed by changing a surface shape of a rotor part, and form the blade for increasing a flow speed by using the rotor magnetic adhesive.

In one general aspect, provided is a rotor with an improved cooling structure, the rotor including: a rotor core formed in a shape of a cylinder and defining a hollow hole passing a central axis of the rotor core; a rotor shaft positioned within the hollow hole of the rotor core, the rotor shaft being fixed along and rotatable about the central axis of the rotor core; and a flow control unit disposed on at least one of the rotor core and the rotor shaft, the flow control unit configured to control a flow of a cooling fluid sprayed to an end of a coil that protrudes from each of two ends of the rotor core in an axial direction.

The rotor shaft may include a support step protruding in a radial direction and contacting one end of the rotor core in the axial direction, and a support surface in contact with the other end of the rotor core in the axial direction, and extending to a predetermined distance from the other end of the rotor core in the axial direction, and the flow control unit may include a first groove having a predetermined depth in a side of the support step or the support surface in a circumferential direction.

The rotor shaft may include a support step protruding in a radial direction and contacting one end of the rotor core in the axial direction, and a support surface in contact with the other end of the rotor core in the axial direction, and extending to a predetermined distance from the other end of the rotor core in the axial direction, and the flow control unit may include a second groove having a predetermined depth in a side of the support step or the support surface in the radial direction.

The flow control unit may further include a third groove disposed in the axial direction in a side where the rotor shaft and the rotor core are in contact with each other, and having a predetermined depth in a position corresponding to the second groove in the radial direction.

The rotor may further include a rotor plate formed in a shape of a disc having one surface in contact with the other end of the rotor core in the axial direction, and the rotor shaft may be positioned within a center of the rotor plate, the flow control unit may further include a fourth groove having a predetermined depth in the other surface of the rotor plate in the axial direction, and extending in the radial direction, and the fourth groove may be inclined for the depth in an opposite side in the axial direction to be shallower than the depth in its side in contact with the rotor shaft in the axial direction.

The flow control unit may further include a fifth groove having a predetermined depth in one end surface of the rotor core in the axial direction, and extending in the radial direction, and the fifth groove may be inclined for the depth in an opposite side in the axial direction to be shallower than the depth in its side in contact with the rotor shaft in the axial direction.

The rotor core may further include a magnet adhesive part fixing a position of a magnet within a magnet insertion hole into which the magnet is positioned and which passes through the rotor core in the axial direction and an insertion-fixing part inserted into a gap between the magnet insertion hole and the magnet, the magnetic adhesive part may include a plate-shaped adhesive plate integrated with the insertion-fixing part, and having one surface in contact with one end surface of the rotor core, and the flow control unit may include a blade part protruding from the other surface of the adhesive plate.

The blade part may include a first blade including two steps spaced apart from each other by a predetermined distance, the first blade may be disposed at a position corresponding to the second groove, and a gap between the respective steps of the first blade may be wider on its opposite side than its side adjacent to the hollow hole of the rotor core.

The blade part may include a second blade formed in a v shape and having one end shielded and the other end open, and the one end of the second blade may be adjacent to the hollow hole of the rotor core, and the other end of the second blade may be adjacent to the wound coil.

The blade part may include a sixth groove spaced apart by a predetermined distance from the second blade in the circumferential direction, the sixth groove may have a predetermined depth in the radial direction from the outermost end of the adhesive plate in the radial direction, and the sixth groove may be disposed at a position corresponding to the second groove.

Other features and aspects will be apparent from the following detailed description, the drawings, and the claims.

### BRIEF DESCRIPTION OF THE DRAWINGS

FIG. 1 is a cross-sectional view of a rotor with an improved cooling structure in the present disclosure.
FIG. 2 is a perspective view of a rotor shaft according to a first embodiment of a flow control unit in the present disclosure.
FIG. 3 is a schematic diagram showing flow a cooling fluid when applying the first embodiment of the flow control unit in the present disclosure.
FIG. 4 is a perspective view of a rotor shaft according to a second embodiment of the flow control unit in the present disclosure.
FIG. 5 is a schematic diagram showing a cooling fluid flow when applying the second embodiment of the flow control unit in the present disclosure.
FIG. 6 is a perspective view of a rotor shaft according to a third embodiment of the flow control unit in the present disclosure.
FIG. 7 is a perspective view of a rotor plate according to the third embodiment of the flow control unit in the present disclosure.
FIG. 8 is a partial perspective view of a rotor core according to the third embodiment of the flow control unit in the present disclosure.
FIG. 9 is a schematic diagram showing a cooling fluid flow when applying the third embodiment of the flow control unit in the present disclosure.
FIG. 10 is a partial perspective view of a rotor core according to a first-fourth embodiment of the flow control unit in the present disclosure.
FIG. 11 is a schematic diagram showing a cooling fluid flow when applying the first-fourth embodiment of the flow control unit in the present disclosure.
FIG. 12 is a partial perspective view of a rotor core according to a second-fourth embodiment of the flow control unit in the present disclosure.
FIG. 13 is a schematic diagram showing a cooling fluid flow when applying the second-fourth embodiment of the flow control unit in the present disclosure.

### DETAILED DESCRIPTION OF EMBODIMENTS

Hereinafter, the technical spirit of the present disclosure is described in more detail with reference to the accompanying drawings. Prior to the description, terms and words used in the specification and claims are not to be construed as general or dictionary meanings, and are to be construed as meanings and concepts meeting the spirit of the present disclosure based on a principle in which the inventors may appropriately define the concepts of the terms in order to describe their inventions in the best mode.

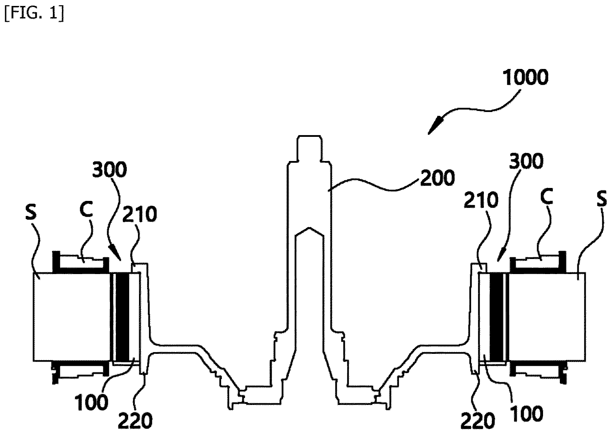

Hereinafter, the description describes a basic configuration of a rotor 1000 with an improved cooling structure of the present disclosure with reference to FIG. 1.

As shown in FIG. 1, the rotor 1000 with an improved cooling structure in the present disclosure may include a rotor core 100 and a rotor shaft 200. In more detail, the rotor core 100 may be formed in a shape of a cylinder having a hollow hole passing through its center, and a stator S on which a coil C is wound may be disposed on its outside. Here, the rotor shaft 200, the rotor core 100, and the stator S may preferably be spaced apart from one another by a predetermined distance in a radial direction. In addition, the rotor core 100 may include a magnet generating an electric field therein. Here, the magnet may have one or more layers in the radial direction. In addition, the rotor shaft 200 may be inserted into and fixed along a central axis A of the rotor core to the hollow hole of the rotor core 100, and rotatable around a central axis of the rotor core 100.

In addition, the rotor 1000 with an improved cooling structure in the present disclosure may include a flow control unit 300. The flow control unit 300 may be a structure disposed on the rotor core 100 or the rotor shaft 200, and control a flow of a cooling fluid sprayed to an end of the coil C that protrudes from each of two ends of the stator S in an axial direction, the stator S being in contact with the outside of the rotor core 100, by being disposed on the rotor core 100 or the rotor shaft 200. More clearly, the flow control unit 300 may increase a flow speed of the cooling fluid flowing on a surface of the rotor core 100 or the rotor shaft 200.

As described above, the rotor 1000 with an improved cooling structure in the present disclosure may include the flow control unit 300 to thus increase a transfer speed of the cooling fluid, thereby increasing a convective heat transfer rate, and may be applied to a water-cooled or air-cooled motor, thereby improving motor performance. In addition, the rotor 1000 may adopt a specific shape in which the flow control unit 300 is integrated with the rotor core 100 and the rotor shaft 200 to thus eliminate an existing cooling part such as an oil pipe, and increase cooling efficiency by thus relatively simple structure, thereby reducing its material and process costs.

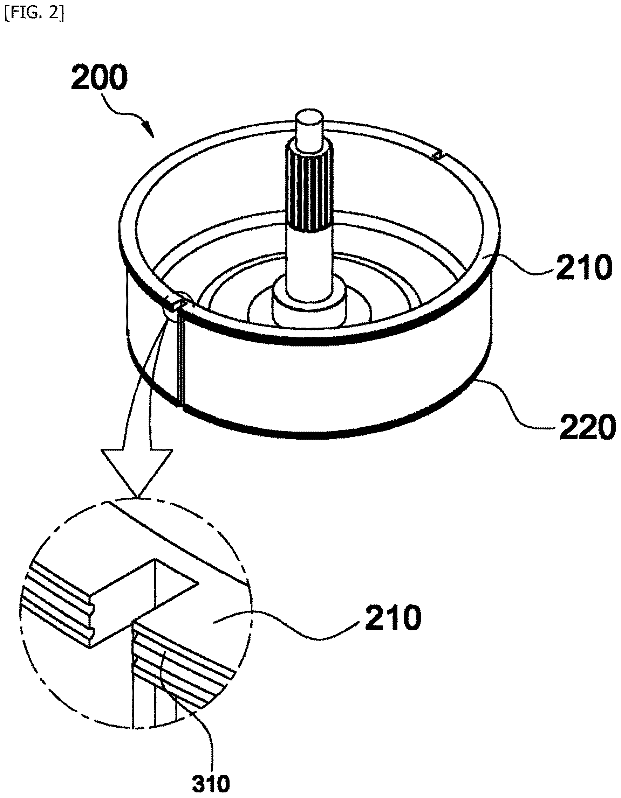

Hereinafter, the description describes first and second embodiments of the flow control unit 300 of the present disclosure in more detail with reference to FIGS. 2 to 5.

The rotor shaft 200 of the present disclosure may include a support step 210 protruding in the radial direction to be in contact with one end of the rotor core 100 in the axial direction. The rotor shaft 200 may include the support step 210 to thus support a position of the rotor core 100 disposed on its side. In addition, the rotor shaft 200 of the present disclosure may include a support surface 220 in contact with the other end of the rotor core 100 in the axial direction, and extending to a predetermined distance from the other end of the rotor core 100 in the axial direction. The support surface 220 may extend from the side of the rotor shaft 200 that is in contact with the rotor core 100 in the axial direction without protruding or recessing in the radial direction. A rotor plate 230 supporting the position of the rotor core 100 may be inserted into the support surface 220. Details of the rotor plate 230 are described below.

In the first embodiment of the flow control unit 300 in the present disclosure that is shown in FIG. 2, the flow control unit 300 may include a first groove 310 having a predetermined depth in a side of the support step 210 or the support surface 220 in a circumferential direction. Two or more first grooves 310 may be provided, and the respective first grooves 310 may be spaced apart from each other by a predetermined distance in the axial direction. In addition, the first groove 310 may be disposed only in a portion of a circumference of the support step 210 or the support surface 220 rather than being disposed in its entire circumference. Accordingly, more first grooves 310 may be disposed in a portion where the cooling fluid is concentrated considering an expected movement path of the cooling fluid.

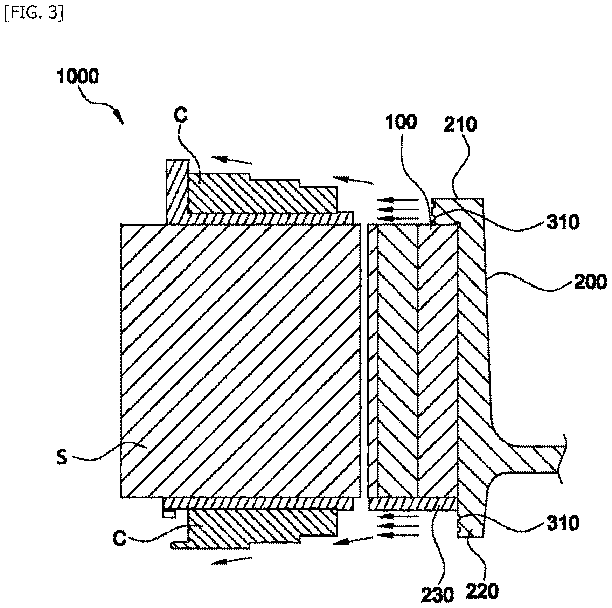

The first groove 310 may be disposed in the side of the support step 210 or the support surface 220 in the circumferential direction, and as shown in FIG. 3, each first groove 310 may thus serve as a blade generating a flow rate in the cooling fluid on the surface of the rotor shaft 200 or the rotor core 100 when the rotor shaft 200 is rotated to thus increase the flow speed of the cooling fluid flowing on a surface of the rotor shaft 200 or the rotor core 100, thereby allowing the cooling fluid to be smoothly transferred toward the end coil C that protrudes from each of the two ends of the stator S.

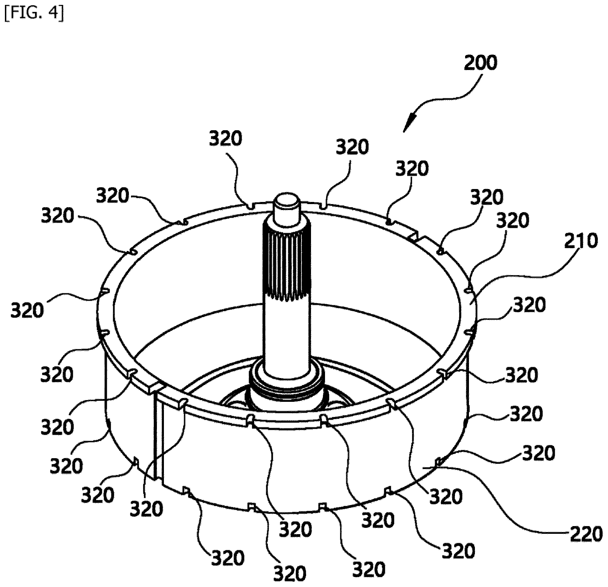

In addition, in the second embodiment of the flow control unit 300 in the present disclosure that is shown in FIG. 4, the flow control unit 300 may include a second groove 320 having a predetermined depth in a side of the support step 210 or the support surface 220 in the radial direction. The second groove 320 may have a predetermined width in the circumferential direction. In addition, two or more second grooves 320 may be provided, and the respective second grooves 320 may be spaced apart from each other by a predetermined distance in the circumferential direction. In addition, the second grooves 320 may be disposed more densely in the portion where the cooling fluid is concentrated considering the expected movement path of the cooling fluid.

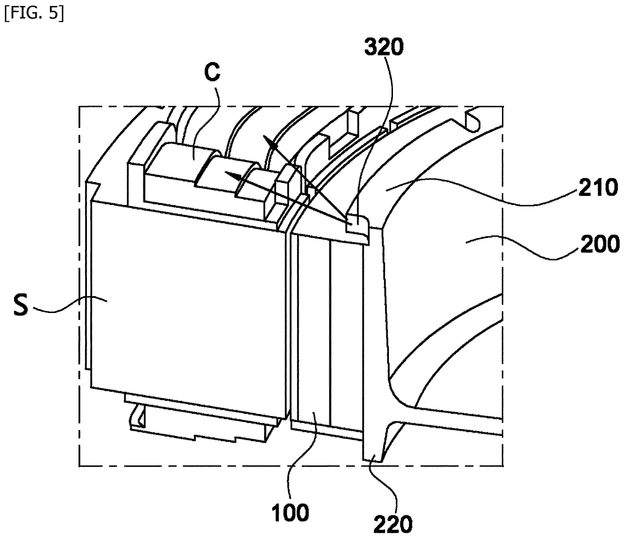

The second groove 320 may be disposed in the side of the support step 210 or the support surface 220 in the radial direction, and as shown in FIG. 5, each second groove 320 may thus serve as a blade generating the flow rate in the cooling fluid on the surface of the rotor shaft 200 or the rotor core 100 when the rotor shaft 200 is rotated to thus increase the flow speed of the cooling fluid flowing on this surface, thereby allowing the cooling fluid to be smoothly transferred toward the end coil C that protrudes from each of the two ends of the stator S.

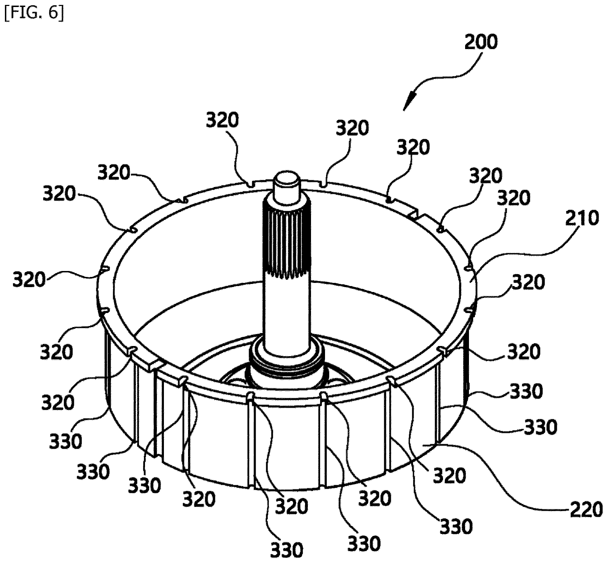

Hereinafter, the description describes a third embodiment of the flow control unit 300 of the present disclosure in more detail with reference to FIGS. 6 to 9.

In the third embodiment of the flow control unit 300 of the present disclosure shown in FIG. 6, the flow control unit 300 may further include a third groove 330 disposed in the axial direction in a side where the rotor shaft 200 and the rotor core 100 are in contact with each other, and having a predetermined depth in a position corresponding to the second groove 320 in the radial direction. That is, the number of third grooves 330 may be the same as the number of second grooves 320, and a width of each third groove 330 in the circumferential direction may be proportional to that of the corresponding second groove 320 in the circumferential direction. The third groove 330 may be formed in a straight line to the support surface 220 from the side of the rotor shaft 200, where the rotor shaft 200 and the rotor core 100 are in contact with each other.

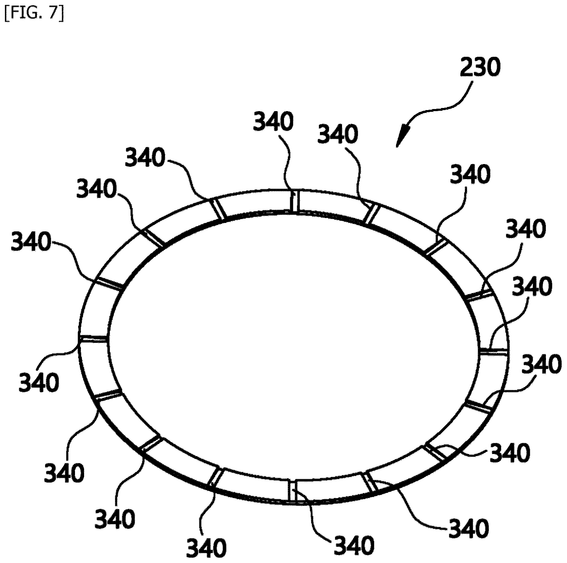

In addition, as shown in FIG. 7, the rotor shaft 200 may further include the rotor plate 230 formed in a shape of a disc (e.g., a generally disc shape) having one surface in contact with the other end of the rotor core 100 in the axial direction, and having the rotor shaft 200 inserted in its center. The rotor plate 230 may be inserted into the support surface 220 described above. Here, the flow control unit 300 may further include a fourth groove 340 having a predetermined depth in the other surface of the rotor plate 230 in the axial direction, and extending in the radial direction. The fourth groove 340 may also be disposed in a position corresponding to the third groove 330 described above.

Further, the fourth groove 340 may be inclined for the depth in an opposite side, i.e., its side adjacent to the end of the coil C, in the axial direction to be shallower than the depth in its side in contact with the rotor shaft 200 in the axial direction. Accordingly, the cooling fluid transferred to the rotor core 100 along the third grooves 330 in the surface of the rotor shaft 200 may be radiated and transferred along the fourth grooves 340. Accordingly, the cooling fluid may be transferred more uniformly to an upper portion of the end coil C disposed at one end of the stator S, thus increasing cooling performance on the end coil C.

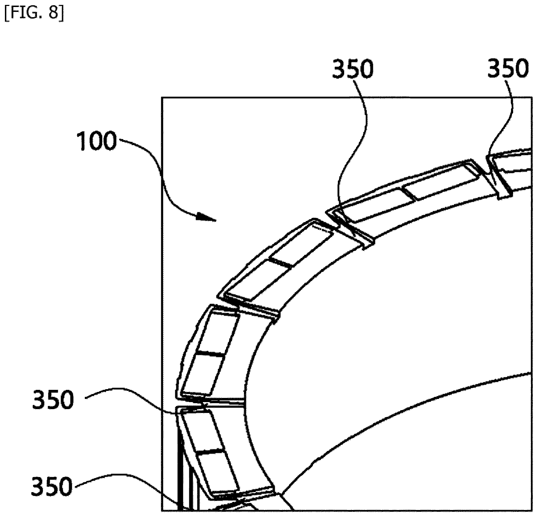

In addition, as shown in FIG. 8, the flow control unit 300 may further include a fifth groove 350 having a predetermined depth in one end surface of the rotor core 100 in the axial direction, and extending in the radial direction. The fifth groove 350 may also be disposed in a position corresponding to the second groove 320 described above. Here, the fifth groove 350 may be inclined for the depth in an opposite side in the axial direction to be shallower than the depth in its side in contact with the rotor shaft 200 in the axial direction. Accordingly, the cooling fluid transferred to the rotor core 100 along the second groove 320 in the surface of the rotor may be radiated and transferred along the fifth grooves 350. Accordingly, the cooling fluid may be transferred more uniformly to an upper portion of the end coil C disposed at one end of the stator S, thus increasing cooling performance on the end coil C.

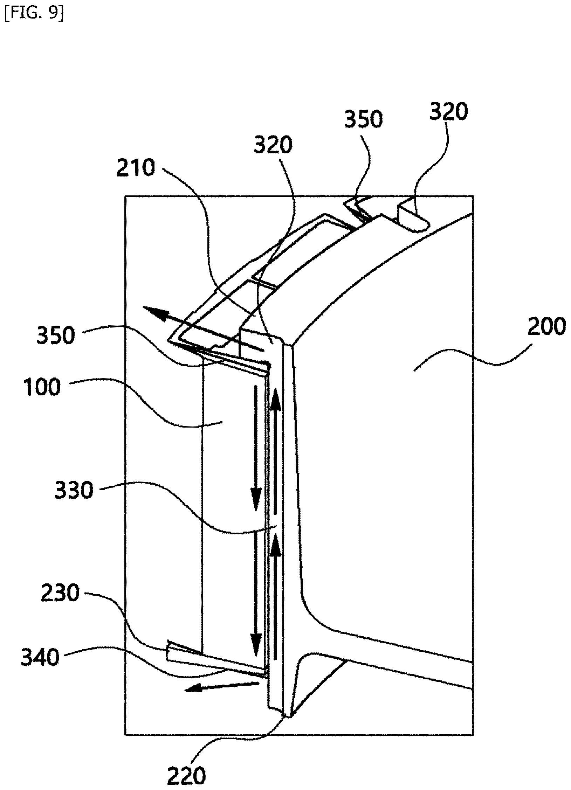

The third embodiment of the flow control unit 300 may be applied as described above, and as shown in FIG. 9, a predetermined flow path may thus be formed between the third groove 330 and the rotor core 100, and the cooling fluid may be transferred to the support step 210 or the support surface 220 along the third groove 330. As a result, an inner surface of the rotor core 100 or the rotor shaft 200 may also be cooled, thereby maximizing the cooling efficiency.

In addition, the cooling fluid may be sprayed to the outside of the rotor core 100 by the fourth groove 340 and the fifth groove 350, and the cooling fluid may be blocked by the end coil C close to the rotor shaft 200 even though the end coil C has a high protruding height, thereby preventing a cooling failure of the end coil C disposed at a relative outside of the rotor core 100 in the radial direction. That is, the end coil C and the rotor may be cooled more efficiently and uniformly.

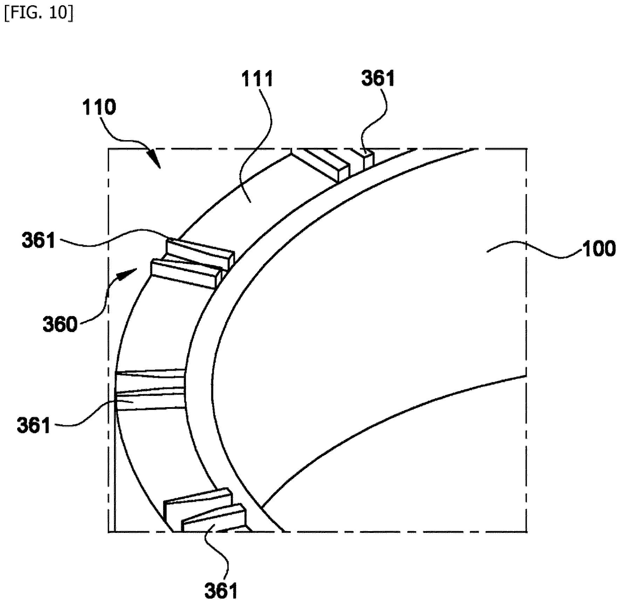

Hereinafter, the description describes fourth embodiments of the flow control unit 300 in the present disclosure in more detail with reference to FIGS. 10 to 13.

The rotor core 100 may further include a magnet adhesive part 110 fixing a position of the magnet by including a magnet insertion hole into which the magnet is inserted and which passes through the rotor core in the axial direction and an insertion-fixing part inserted into a gap between the magnet insertion hole and the magnet. Here, the magnetic adhesive part 110 may include a plate-shaped adhesive plate 111 integrated with the insertion-fixing part, and having one surface in contact with one end surface of the rotor core 100. In more detail, the magnetic adhesive portion 110 may be an adhesive such as epoxy, or may be an injection molded product such as a mold.

Here, in the fourth embodiment of the flow control unit 300 in the present disclosure, the flow control unit 300 may be integrated with the magnet adhesive part 110. In more detail, the flow control unit 300 may include a blade part 360 protruding from the other surface of the adhesive plate 111.

In a first-fourth embodiment of the flow control unit 300 shown in FIG. 10, the blade part 360 may include a first blade 361 including two steps spaced apart from each other by a predetermined distance. That is, the first blade 361 may have the steps formed into a 11 character, and the cooling fluid may flow therebetween. Here, two or more first blades 361 each having the steps formed in the 11 character may be disposed on the other surface of the adhesive plate 111 in the circumferential direction. More clearly, the first blade 361 may be disposed at a position corresponding to the second groove 320. Accordingly, the cooling fluid flowing along the surface of the second groove 320 may be transferred to the first blade 361.

Furthermore, a gap between the respective steps of the first blade 361 may be wider on its opposite side, i.e., its side adjacent to the end coil C, than its side adjacent to the hollow hole of the rotor core 100. A hydraulic pressure may be decreased when the cooling fluid is transferred from the first blade 361 toward the end coil C, compared to when the cooling fluid is transferred toward the first blade 361, and the cooling fluid may thus be sprayed to the end coil C.

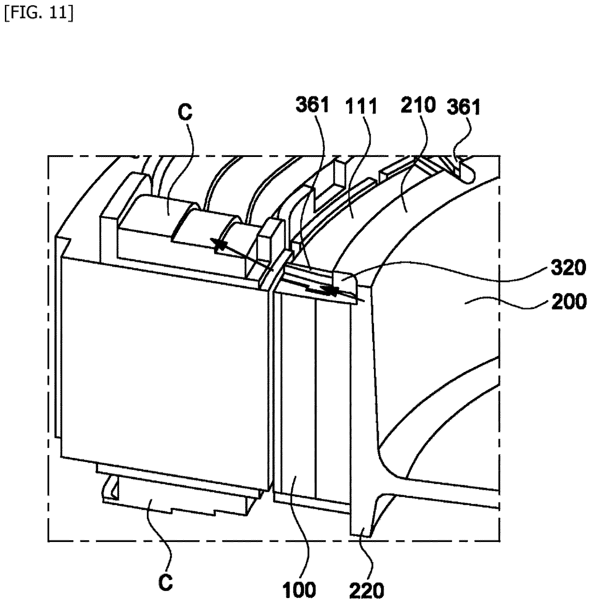

Accordingly, as shown in FIG. 11, the first blade 361 may serve as the blade generating the flow rate in the cooling fluid on the surface of the rotor shaft 200 or the rotor core 100 when the rotor shaft 200 is rotated to thus increase the flow speed of the cooling fluid flowing on this surface, thereby allowing the cooling fluid to be smoothly transferred toward the end coil C that protrudes from each of the two ends of the stator S disposed outside the rotor core 100.

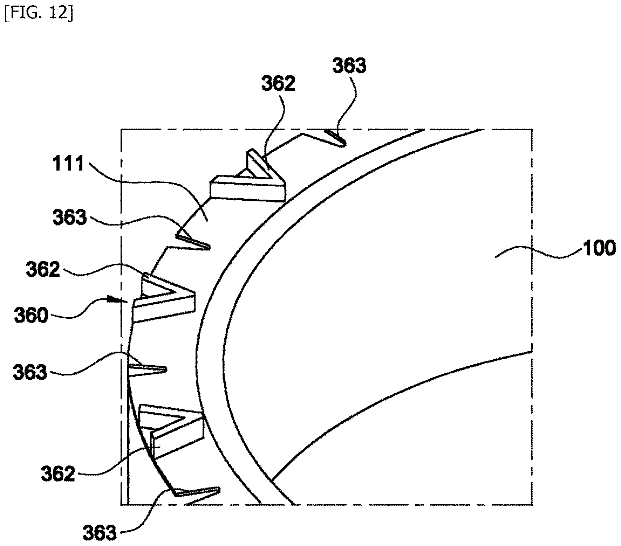

In addition, in the second-fourth embodiment of the flow control unit 300 of the present disclosure shown in FIG. 12, the blade part 360 may include a second blade 362 formed in a v shape and having one end shielded and the other end open. Here, one end of the second blade 362, that is, its portion corresponding to a lower end of the v shape, may be adjacent to the hollow hole of the rotor core 100, and the other end of the second blade 362, that is, its portion corresponding to an upper end of the v shape, may be adjacent to the wound coil C. Accordingly, the cooling fluid may flow along the surface of the second blade 362. Here, two or more second blades 362 each formed in the V shape may be disposed on the other surface of the adhesive plate 111 in the circumferential direction

Furthermore, in the second-fourth embodiment of the flow control unit 300, the blade part 360 may include a sixth groove 363 spaced apart by a predetermined distance from the second blade 362 in the circumferential direction. The sixth groove 363 may have a predetermined depth in the radial direction from the outermost end of the adhesive plate 111 in the radial direction, and pass through the adhesive plate 111 in the axial direction. In addition, the sixth groove 363 may be disposed at a position corresponding to the second groove 320.

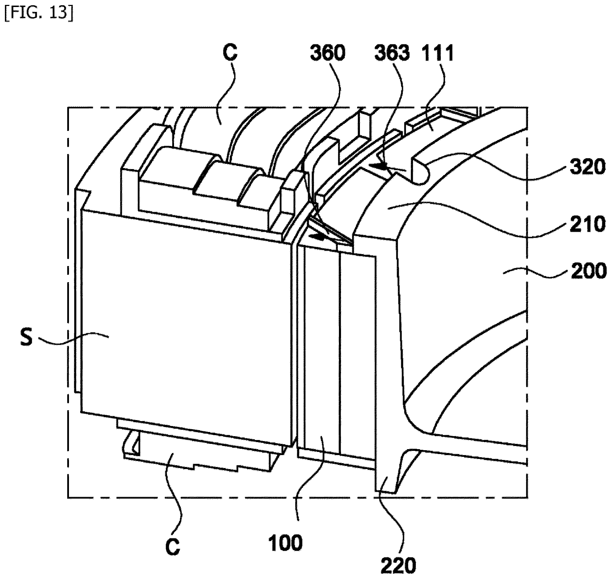

Accordingly, as shown in FIG. 13, the first blade 361 may serve as the blade generating the flow rate in the cooling fluid on the surface of the rotor shaft 200 or the rotor core 100 when the rotor shaft 200 is rotated to thus increase the flow speed of the cooling fluid flowing on this surface, thereby allowing the cooling fluid to be smoothly transferred toward the end coil C that protrudes from each of the two ends of the stator S disposed outside the rotor core 100.

As set forth above, the rotor with an improved cooling structure in the present disclosure may change the motor rotor structure with no additional parts and form the blade on its surface by using the magnetic fixation adhesive to thus increase the transfer speed of the cooling fluid, thereby increasing the convective heat transfer rate, may be applied to the water-cooled or air-cooled motor, thereby improving the motor performance, and may adopt the relatively simple structure, such as eliminating the existing cooling part such as the oil pipe, thereby reducing its material and process costs.

The spirit of the present disclosure should not be interpreted as being limited to the embodiments described above. The present disclosure may be applied to various fields and may be variously modified by those skilled in the art without departing from the scope of the present disclosure claimed in the claims. Therefore, it is obvious to those skilled in the art that these alterations and modifications fall within the scope of the present disclosure.

## Claims

1. A rotor with an improved cooling structure, the rotor comprising:
a rotor core formed in a shape of a cylinder and defining a hollow hole passing through a central axis of the rotor core;
a rotor shaft positioned within the hollow hole of the rotor core, the rotor shaft being fixed along and rotatable about the central axis of the rotor core; and
a flow control unit disposed on at least one of the rotor core and the rotor shaft, the flow control unit configured to control a flow of a cooling fluid sprayed to an end of a coil that protrudes from each of two ends of the rotor core in an axial direction.

2. The rotor of claim 1, wherein the rotor shaft further includes:
a support step protruding in a radial direction and contacting one end of the rotor core in the axial direction, and
a support surface in contact with the other end of the rotor core in the axial direction, and extending to a predetermined distance from the other end of the rotor core in the axial direction, and
wherein the flow control unit includes a first groove having a predetermined depth in a side of the support step or the support surface in a circumferential direction.

3. The rotor of claim 1 or 2, wherein the rotor shaft further includes:
a support step protruding in a radial direction and contacting one end of the rotor core in the axial direction, and
a support surface in contact with the other end of the rotor core in the axial direction, and extending to a predetermined distance from the other end of the rotor core in the axial direction, and
wherein the flow control unit includes a second groove having a predetermined depth in a side of the support step or the support surface in the radial direction.

4. The rotor of claim 3, wherein the flow control unit further includes a third groove disposed in the axial direction in a side where the rotor shaft and the rotor core are in contact with each other, and having a predetermined depth in a position corresponding to the second groove in the radial direction.

5. The rotor of claim 4, further comprising a rotor plate formed in a shape of a disc having one surface in contact with the other end of the rotor core in the axial direction, and wherein the rotor shaft is positioned within a center of the rotor plate,
the flow control unit further includes a fourth groove having a predetermined depth in the other surface of the rotor plate in the axial direction, and extending in the radial direction, and
the fourth groove is inclined for the depth in an opposite side in the axial direction to be shallower than the depth in its side in contact with the rotor shaft in the axial direction.

6. The rotor of claim 4 or 5, wherein the flow control unit further includes a fifth groove having a predetermined depth in one end surface of the rotor core in the axial direction, and extending in the radial direction, and
the fifth groove is inclined for the depth in an opposite side in the axial direction to be shallower than the depth in its side in contact with the rotor shaft in the axial direction.

7. The rotor of any one of claims 3 to 6, wherein the rotor core further includes a magnet adhesive part fixing a position of a magnet within a magnet insertion hole into which the magnet is positioned and which passes through the rotor core in the axial direction, and
an insertion-fixing part inserted into a gap between the magnet insertion hole and the magnet,
the magnetic adhesive part includes a plate-shaped adhesive plate integrated with the insertion-fixing part, and having one surface in contact with one end surface of the rotor core, and
the flow control unit includes a blade part protruding from the other surface of the adhesive plate.

8. The rotor of claim 7, wherein the blade part includes a first blade including two steps spaced apart from each other by a predetermined distance,
the first blade is disposed at a position corresponding to the second groove, and
a gap between the respective steps of the first blade is wider on its opposite side than its side adjacent to the hollow hole of the rotor core.

9. The rotor of claim 7, wherein the blade part includes a second blade formed in a v shape and having one end shielded and the other end open, and
the one end of the second blade is adjacent to the hollow hole of the rotor core, and the other end of the second blade is adjacent to the wound coil.

10. The rotor of claim 9, wherein the blade part includes a sixth groove spaced apart by a predetermined distance from the second blade in the circumferential direction,
the sixth groove has a predetermined depth in the radial direction from the outermost end of the adhesive plate in the radial direction, and
the sixth groove is disposed at a position corresponding to the second groove.
